# EUROPEAN PATENT SPECIFICATION

(11) **EP 3 195 279 B1**
(45) Date of publication and mention of the grant of the patent: **11.12.2019**
(21) Application number: 15778791.2
(22) Date of filing: 11.09.2015
(51) Int. Cl.: G07D 7/121, G07D 7/128, G07D 7/1205, G06K 7/10, G06K 19/06, H04N 5/225

(54) **DETECTING UV-FLUORESCENT INDICIA WITH A CAMERA**
DETEKTION EINES UV-FLUORESZENTEN INDIZES MIT EINER KAMERA
DÉTECTION D'INSCRIPTIONS FLUORESCENTES AUX UV AVEC UNE CAMÉRA

(30) Priority: 17.09.2014 US 201414488374
(43) Date of publication of application: 26.07.2017
(73) Proprietor: Smartrac Solutions, Inc., Westerville, OH 43082 (US)
(72) Inventor: PAWLIK, Thomas, Rochester, NY 14618 (US); BOSE, Judith, Webster, NY 14580 (US); COK, Ronald, Rochester, NY 14625 (US); BLISH, Nelson, Rochester, NY 14618 (US)
(74) Representative: Wagner & Geyer
(86) International application number: PCT/US2015/049560
(87) International publication number: WO 2016/044074

(56) References cited:
- EP-A1- 0 543 058
- WO-A1-2009/158324
- DE-A1-102011 077 904
- US-A1- 2012 235 785
- US-B1- 6 771 357

## Description

### FIELD OF THE INVENTION

This invention relates in general to authentication of objects having fluorescent indicia and in particular to authentication of objects using a cell phone.

### BACKGROUND OF THE INVENTION

Applying invisible covert marks and indicia to products, product packaging, documents and printed materials is a well established method for authenticating products and thus combating counterfeiting. In addition, when variable invisible information is printed, batch-level and item-level tracking of products can be accomplished in a covert manner. Common covert marking materials are ultraviolet (UV) fluorescent inks. The security information is invisible under normal, visible lighting but is revealed when a UV light source is used, such as a UV flashlight. The product or document of interest is authenticated by revealing the invisible indicia with the UV flashlight and visually verifying the image or human-readable text or code that is revealed. While this can be an effective security feature, the authentication process has limitations.

When authenticating products and documents in the field, it is desirable for investigators to perform their audits in a covert manner, often without handling the item to be authenticated or using extraneous or unusual devices to reveal the covert indicia. It is therefore useful to be able to authenticate an item from some distance, not require the revealing device be in close proximity to the product, and to use revealing devices that are commonplace and inconspicuous.

During investigations, it is often the case that many items need to be authenticated sequentially, and the results of the authentication audit transmitted to another location. It is therefore useful to be able to automate the method for recording and storing the results and to have a convenient means for transmitting the results once collected. In these cases, a UV flashlight alone is not adequate to support the required workflow.

It is also sometimes desirable to have an immediate response to a positive or negative authentication audit. It is therefore useful to have a system that can not only transmit the results of an authentication audit, but also receive a response to the authentication.

Because acquiring information in the field is frequently a requirement, mobile devices are extremely useful when conducting investigations. It is also useful to be able to acquire images of indicia, display such images and analyze them with mobile devices. For example, smart phones include useful sensors, flashes for light exposures, and microprocessors for processing data and images. However, such devices are designed to detect visible indicia and are not suitable for detecting covert invisible indicia.

It is also often desirable to encode a large amount of data in invisible indicia, for example an item-level serialized number. To reduce the amount of space required to print the data or to speed up reading the printed information, the data can be printed in the form of a machine-readable code rather than a human-readable code, for example a linear or two-dimensional bar code. It is therefore useful to be able to quickly and conveniently decode a revealed, covert machine-readable code to be able to quickly authenticate the item. Again, in these cases, a UV flashlight is insufficient to support the required workflow.

In addition to fluorescent materials, phosphorescent materials can be used to create invisible indicia. Phosphorescent materials not only have a signature wavelength of light that is emitted, they also have a signature rate of decay of that emission. It is well known that rates of decay can be determined by measuring the intensity of emission at varying time points. It is also well known that the wavelength of emission and rate of decay of emission are characteristics that can be used to identify phosphorescent materials.

DE 10 2011 077904 A discloses an illumination unit which illuminates a document arranged in camera space surrounded by housing, by a controller coupled with an interface. A receiving unit is arranged at outer side, to receive a mobile phone equipped with a camera. A camera lens is arranged at front side of opening formed in housing, for detecting the document in the camera space. The interface is connected to an interface of mobile phone, to control the illumination unit by an application executed in a processor unit of mobile phone. An independent claim is included for a method for administrative review of security document.

### SUMMARY OF THE INVENTION

In accordance with the present invention, a system as set forth in claim 1 is provided. Further embodiments are inter alia disclosed in the dependent claims. In particular, briefly, according to one aspect of the present invention, a system for detecting UV-light-fluorescent indicia with a camera includes a camera flash that emits visible light, a conversion device mounted over the camera flash that converts the emitted visible light to UV light, and a sensor that captures a visible- light image of the indicia after the indicia is exposed to the U V light.

In another embodiment of the present invention the conversion device comprises a photovoltaic device that converts the visible light emitted by the camera flash to electrical power, and a UV lamp that converts the electric power to UV light. The conversion device can also contain a capacitor.

The conversion device can be affixed to the camera in any of a number of ways including via adhesives, mechanical hardware, and magnets. The conversion device can also be incorporated into a case or a shell that is attached to the camera, for example in a manner similar to cases and shells that are used with mobile phones (also referred to as cell phones and smart phones) or tablet devices.

According to another aspect of the present invention, the method can further involve analyzing the captured image with a microprocessor, using the microprocessor to compare the analyzed image to stored, reference, or standard information to determine a match, and then authenticating the image if there is a match. By association, if the image is authentic then so is the item having the image.

According to another aspect of the present invention, the system can further be configured for displaying the captured image with a display on the camera and comparing the displayed image to a stored or reference or standard image and authenticating the image (and therefore item) if there is a match.

According to another aspect of the present invention, the system can further be configured for transmitting the captured image from the camera to a remote computer for comparison to a stored, reference or standard image and authenticating the image (and therefore item) if there is a match. The result of the authentication audit can then be transmitted back to the camera.

In one embodiment of the present invention the camera, flash, sensor, microprocessor and memory are components of a cell phone or smart phone.

According to an aspect of the present invention the UV-light-fluorescent indicia comprise a plurality of UV-responsive materials that can differ in their characteristic response to UV illumination. The response characteristic can be color of emitted light, brightness (or luminance) of emitted light, or rate of decay of emitted light. The indicia can be an image, text, a graphic element, a bar code, or a logo.

The invention and its objects and advantages will become more apparent in the detailed description of the preferred embodiment presented below.

### BRIEF DESCRIPTION OF THE DRAWINGS

FIG. 1 is a schematic representation of a camera comprising a flash, a sensor, a microprocessor and memory;
FIG. 2 is a schematic representation of the visible-to-UV light conversion device;
FIG. 3 is a plot showing the transient voltage obtained from a specific photo cell connected to a resistive load of 3.3 kOhm over time;
FIG. 4 is a representation of a code captured with a smart phone with attached visible-to-UV light conversion device;
FIG. 5 is a schematic representing a variant of the visible-to-UV light conversion device that incorporates control electronics and energy storage in addition to the components shown in FIG. 2;
FIG. 6 is a schematic representation of the front and back sides of a smart phone indicating the display, camera and flash;
FIG. 7 is a schematic of the visible-to-UV light conversion device placed over the flash of a smart phone;
FIG. 8 is a schematic representation of an object wherein the indicia consist of two UV-responsive materials and that are spatially arranged in a pattern;
FIG. 9 is a schematic representation of an object wherein the indicia consist of two UV-responsive materials that are randomly distributed;
FIG. 10 is a schematic representation of an object wherein the indicia consist of two UV-responsive materials printed to form parts of a text string;
FIG. 11 is a schematic representation of a sequence of image captures of the object in FIG. 10 wherein the first and third images are captured with the sensor when the camera flash is not operated, and the second image is captured when the flash is operated;
FIG. 12 is a schematic representation of a sequence of image captures of the object of FIG. 10 where the first image is captured with the sensor when the camera flash is not operated and the second and third images are captured when the flash is operated; and
FIG. 13 is a plot of the time behavior of the emission of two UV responsive materials undergoing two sequential flash exposures and representations of the corresponding images captured at specified times.

### DETAILED DESCRIPTION OF THE INVENTION

The present invention will be directed in particular to elements forming part of, or in cooperation more directly with the apparatus in accordance with the present invention. It is to be understood that elements not specifically shown or described may take various forms well known to those skilled in the art.

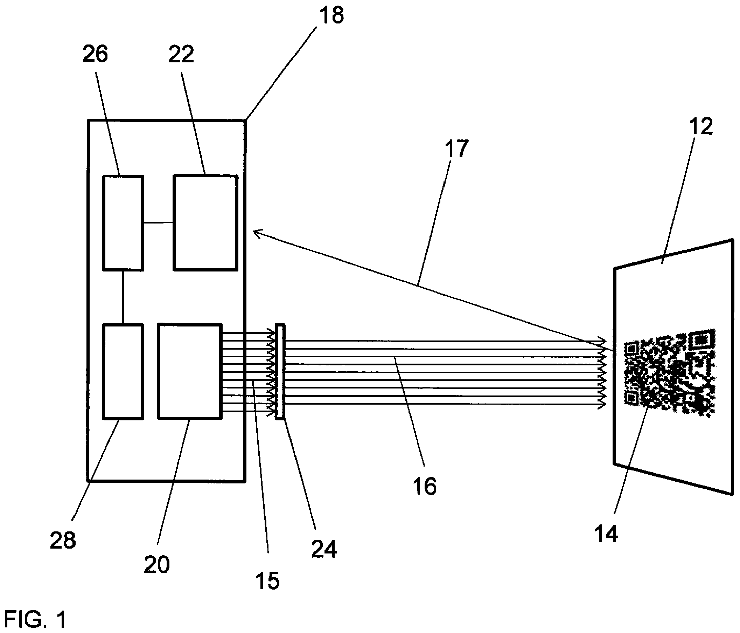

FIG. 1 shows a schematic representation of a camera 18 comprising a flash 20, a sensor 22, a microprocessor 26, and a memory 28. Mounted in front of the flash is a visible-to-UV light conversion device 24. This device transforms the incident visible light 15 from the flash 20 into UV light 16. The conversion device 24 can be attached to the camera 18 by way of a clamp, magnet, adhesive, shell, or sleeve or other methods of attachment. The emitted UV light 16 exposes an object 12 with invisible indicia 14. The indicia 14 absorb UV light and emit visible light 17. The visible light is captured by the sensor 22 thus capturing a digital image of the indicia 14. The digital image is read by the microprocessor 26 and stored in the memory 28.

The microprocessor 26 can, for example, be used to compare the captured image to a stored reference image of an authentic object and the authentication process is based on the similarity of the captured image and the stored reference image. The invisible indicia could also be printed in the form of a machine readable code, for example a one or two-dimensional barcode. Examples of these barcodes are Data Matrix barcodes, QR-codes, linear barcode formats like 2 of 5 or code-128. The microprocessor analyzes the image of the invisible indicia and decodes the barcode using a decoding algorithm. Barcode decoding algorithms are well known and widely available. The decoded data are used to authenticate the object, by, for example, comparing the code value to stored values of valid codes. Thus, indicia (and objects) can be authenticated by comparing a captured image of the indicia to a stored reference image. Alternatively, the captured image can be analyzed, for example by processor 26, to extract information from the captured image and the extracted information compared to reference information to authenticate the indicia if a match is found.

The emission of light by a material or substance that has absorbed light, usually of a different wavelength, is referred to as luminescence. Two categories of luminescence are fluorescence and phosphorescence. Fluorescence is characterized by nearly immediate reradiation that ceases instantly when the incident light stops. Reradiation that continues for a noticeable time after the incident light has stopped is referred to as phosphorescence. Certain materials can also change color upon exposure to light. This effect is called photochromism. Copper-activated zinc sulfide or rate earth-doped strontium aluminates are examples of materials that exhibit phosphorescence with long phosphorescence lifetimes.

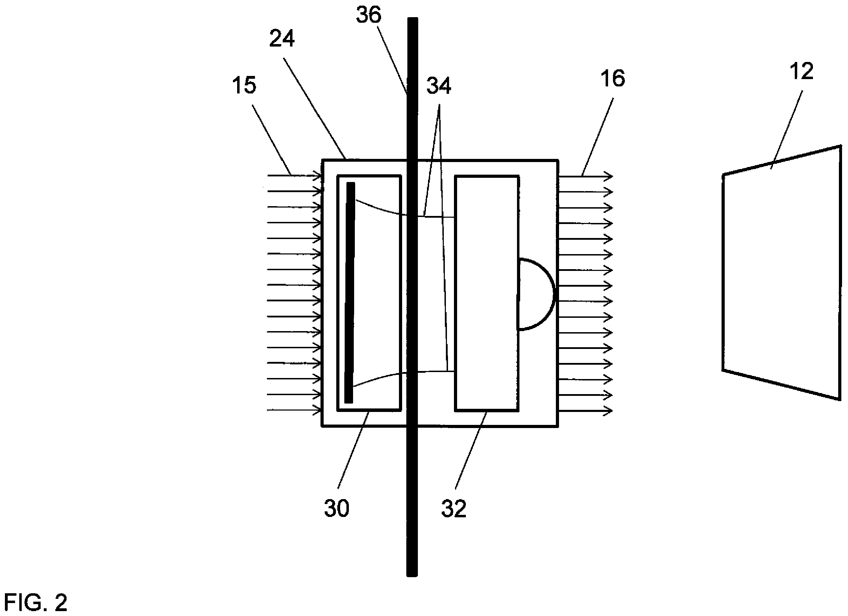

FIG. 2 shows a schematic representation of the visible-to-UV light conversion device 24. It includes a photovoltaic device 30 that converts the incident visible light 15 into electrical energy. This photovoltaic device 30 is connected via electrical connections 34 to a UV lamp 32. The UV lamp 32 uses the electrical energy supplied by the photovoltaic device 30 to generate UV light. A light shield 36 blocks visible light and prevents it from reaching the object 12. An example of a UV lamp is the UV LED, part number XSL-370-3E, supplied by Roithner Lasertechnik GmbH, Vienna, Austria. This LED emits UV light of 370 nm wavelength when supplied with a typical voltage of 3.3 V at a current of 1 mA.

In an embodiment, a typical single silicon photocell used as a photovoltaic device 30 has an output voltage of just 0.6 V (open circuit). At peak power, output voltages are typically 15-20% lower. Therefore, in such an embodiment the output voltage of a single silicon photocell is insufficient to operate the UV LED. Mechanisms exist to increase voltages at the expense of current by employing voltage multipliers. These circuits first convert the supply DC voltage to a pulsed or AC voltage and then use charge pumps made of diodes and rectifiers, or transformers to generate the higher voltage. The use of a voltage multiplier, however, adds complexity and size to the visible-to-UV conversion device 24.

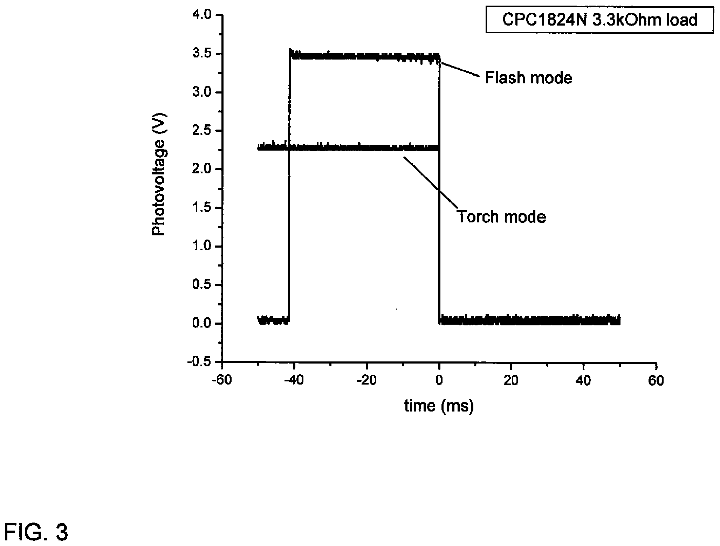

Another way to increase the voltage of a photovoltaic cell is to connect several photovoltaic cells in series. While most of the serially connected photovoltaic devices are large area solar cells and therefore unsuitable to collect the light in close proximity from the small flash of a camera 18, a few devices exist that consist of serially connected photovoltaic devices with a small active area. One example of such a device is a 4V output photo cell, part number CPC1842N, by Clare Inc, Beverly, MA. This device is rated to produce 4V/0.1mA under direct sunlight. It has an active area of 3.5 mm by 2.7 mm, which is comparable in size to the active area of a white LED flash used in most smart phone cameras. Tests were conducted using this device mounted in front of and facing the flash LED of a Samsung Galaxy S3 smart phone (Samsung Electronics, South Korea) in order to determine the electrical voltage and current that can be obtained during the image capture using the smart phone flash. FIG. 3 shows the transient voltage obtained from CPC1842N connected to a resistive load of 3.3 kOhm. Prior to image capture the flash operates at a reduced current (torch mode) to assist focusing. During image capture, the flash operates at a higher current for a duration of 40 milliseconds. During this flash, the voltage measured at the output of the photovoltaic device is 3.45V. This equates to a current of 1.04 mA flowing through the 3.3 kOhm load resistor. This experiment demonstrates that the voltage and current output of the photovoltaic device is sufficient to operate the UV LED XSL-370-3E.

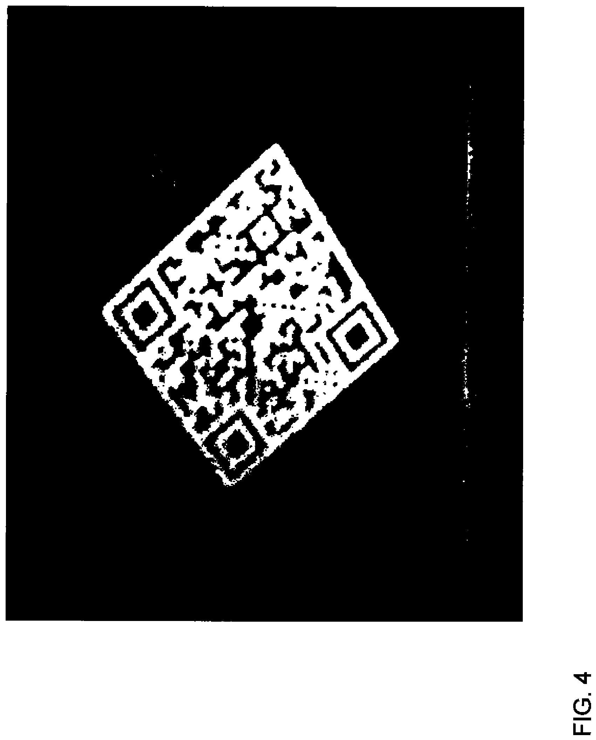

FIG. 4 shows a representation of a code captured with the Samsung Galaxy S3 smart phone with attached visible-to-UV light conversion device 24. The object 12 is a piece of paper with indicia printed with a UV-to-red fluorescent ink available as KODAK NEXPRESS Red Fluorescing Dry Ink from Eastman Kodak, Rochester, NY. The indicia are invisible under normal, visible light, but fluoresce under UV light to emit red light that can be detected by the sensor 22 in the camera 18. The captured image can be analyzed and decoded by a QR decoder. The result of the decoding of the image in FIG. 4 is the string http://www.kodak.com/go/nexpress.

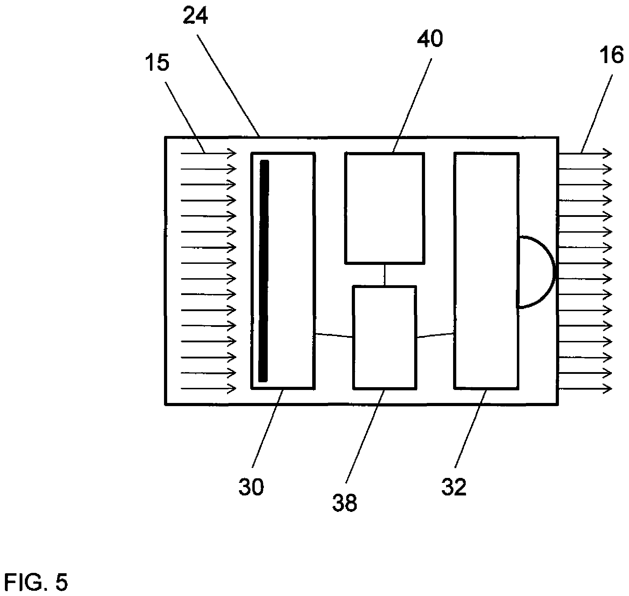

FIG. 5 shows a variant of the visible-to-UV light conversion device 24 that incorporates control electronics 38 and energy storage 40 (capacitor or rechargeable battery) in addition to the components shown in FIG. 2. The purpose of this addition is to capture the light of the flash that is emitted during the focusing operation, convert it to electrical energy using the photovoltaic device 30 and store the converted electrical energy in the energy storage device 40. During image capture, this energy is added to the energy that is available from the flash during image capture and used to power the UV lamp. The control electronics control energy capture, storage and release. The difference in the light intensities of the flash and torch mode, when translated into voltage or current by the photovoltaic device can be used to distinguish the energy collection and storage from the energy release phases of the focusing and image capture process.

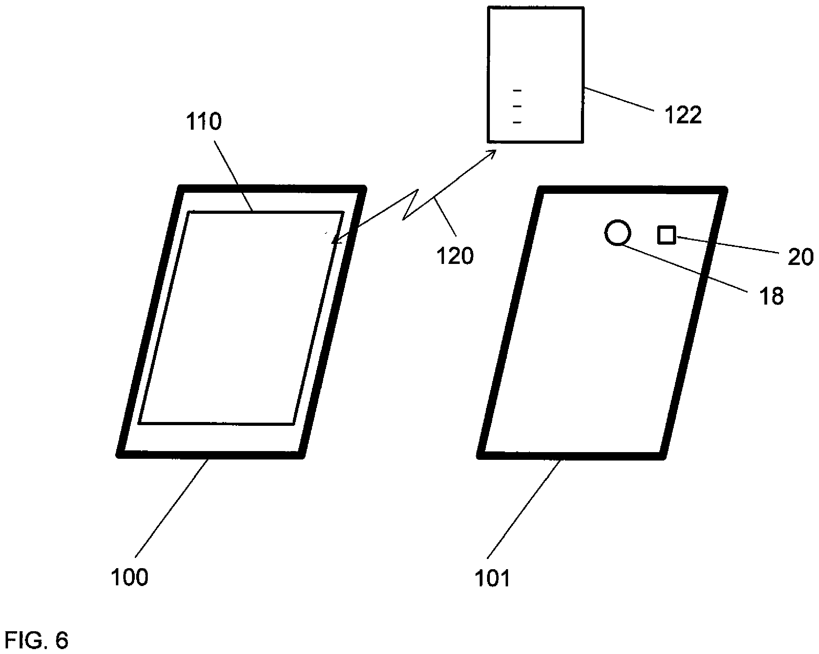

FIG. 6 shows the front side 100 and back side 101 of a smart phone. A display 110 is located on the front side. The back side comprises camera 18 and flash 20. The captured image of the object 12 containing invisible indicia 14 can be displayed on the display 110 in order to enable the operator to compare the displayed image to an expected standard and to ensure that converted light from the flash 20 reaches the object 12. The smart phone also contains a wireless transmitter and receiver allowing bidirectional wireless data transmission 120 with a remote computer 122, for example via a local area network, Bluetooth connection, or a cellular telephony network. This network connection allows the device to transmit the captured image to a remote computer where it is analyzed and compared to a standard to determine a match. Alternatively, if the invisible indicia comprise a machine readable code, it can be decoded by the microprocessor of the smart phone and the decoded data is sent via the wireless network to the remote computer to be compared to stored values of authentic objects. The result of the analysis by the remote computer can be transmitted back to the smart phone and displayed to the operator. In another embodiment, the local microprocessor 26 in the camera 18 performs the comparison to reference data stored in the local memory 28 to authenticate the object.

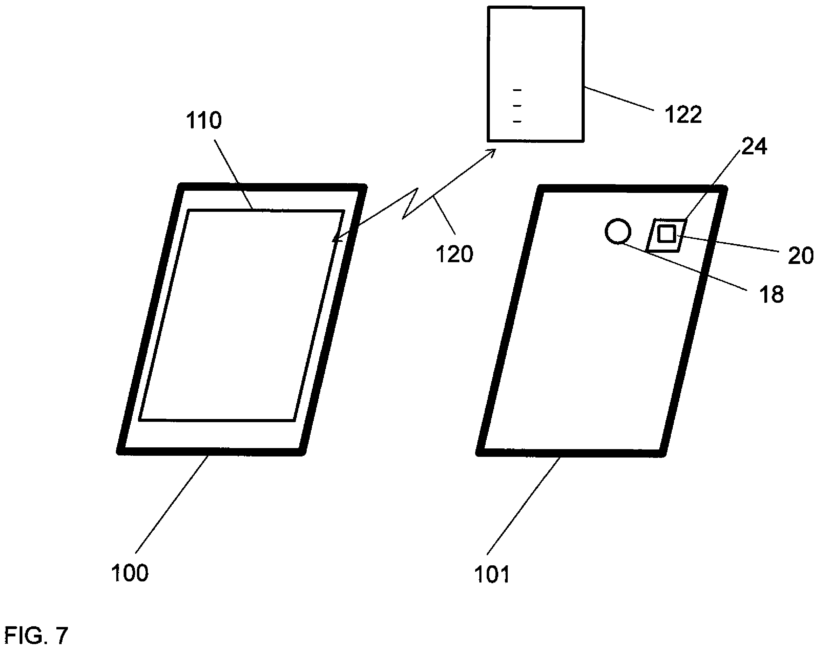

FIG. 7 shows the visible-to-UV light conversion device 24 placed over the flash 20.

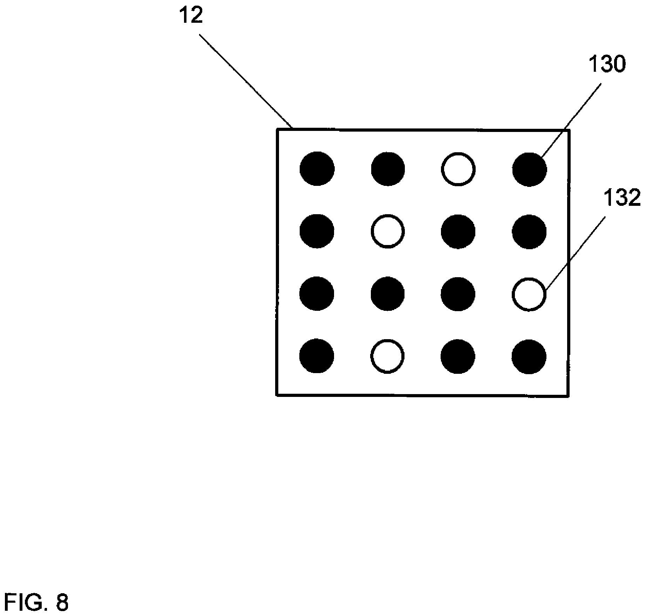

FIG. 8 is a schematic representation of an object 12 wherein the indicia consist of two UV-responsive materials 130 and 132 that are each spatially arranged in a pattern. The two materials 130 and 132 have a different response to the incident UV light and can differ in their color of emission, brightness of emission, rate of decay of emission, or a combination of these properties. Brightness of emission is also referred to as luminance. For example, material 130 could be a UV-to-green emissive material with a long lifetime of emission whereas material 132 could be a UV-to-red emissive material with a short lifetime of emission. UV-responsive materials can be in the form of inks, dyes, pigments, molecules, or particles.

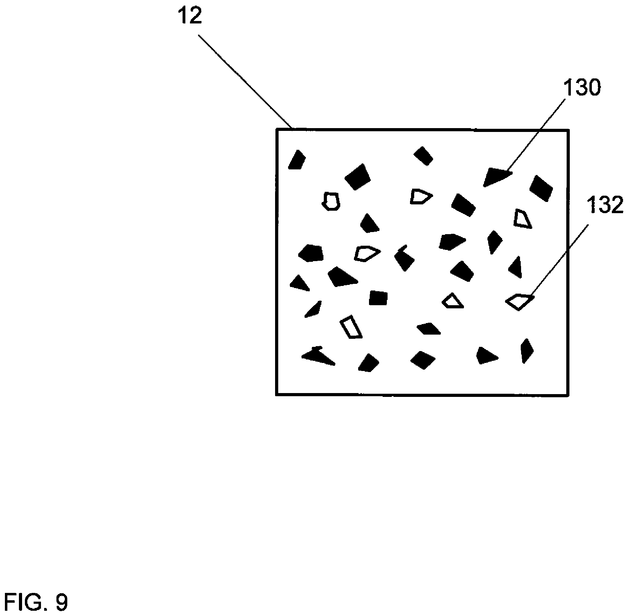

FIG. 9 is a schematic representation of an object 12 wherein the indicia consist of two UV-responsive materials 130 and 132 that are randomly distributed.

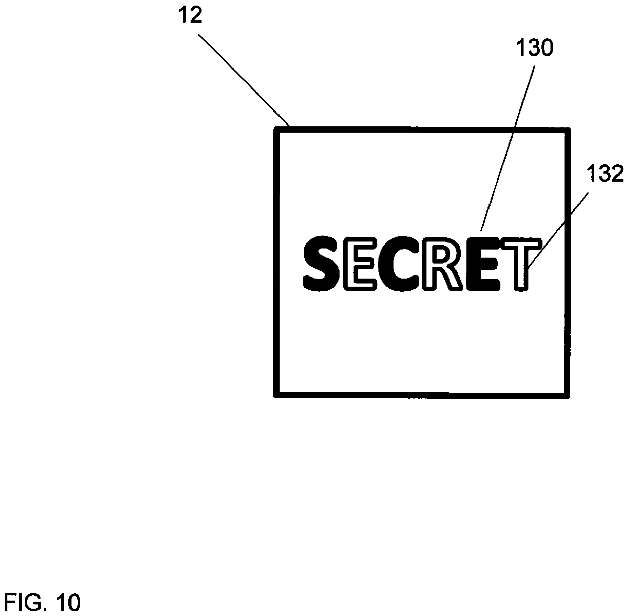

FIG. 10 is a schematic representation of an object 12 wherein the indicia consist of two UV-responsive materials 130 and 132 printed to form parts of a text.

Thus, in various embodiments, the UV-responsive materials in the indicia can form an image, a color image, a pattern, graphic element, random arrangement, or text.

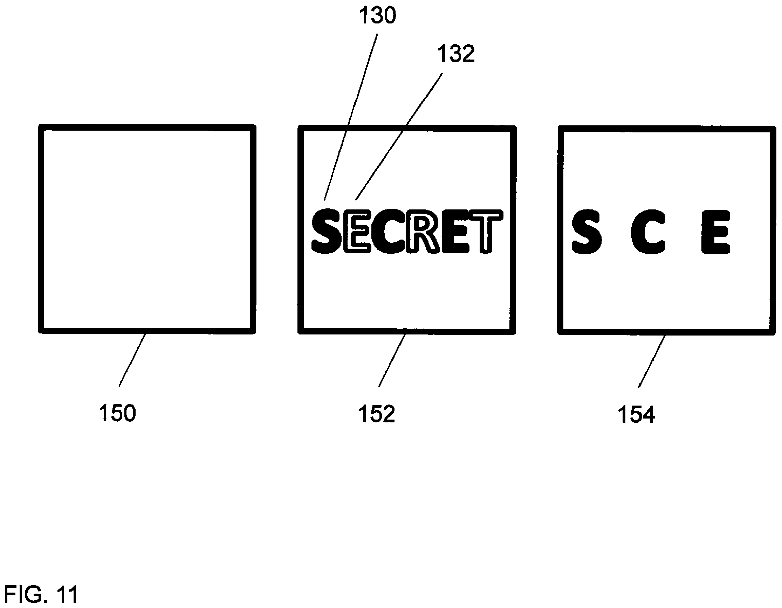

FIG. 11 is a schematic representation of a sequence of image captures of the object 12 in FIG. 10 wherein the first image 150 is captured with the sensor when the flash is not operated. The second image is captured when the flash is operated and the third image is captured after the second image capture when the flash is not operated. The three images are acquired at regular intervals, although they could be acquired at irregular intervals. Many cameras have a mode of operation that allows image capture to occur in a burst mode, that is, multiple images are captured in rapid succession. As used herein, a burst mode can apply to either the flash (multiple flashes in rapid succession) or to image capture (multiple images captured in rapid succession). The flash burst mode can control the flash 20 to operate at regular intervals or at irregular intervals. Likewise, the image burst mode can control the sensor 22 to operate at regular intervals or at irregular intervals. In the first image 150, the indicia are invisible because there is no incident UV light from the visible-to-UV light conversion device 24 (because the flash 20 was not operated). In the second image 152, the indicia 14 are visible because the flash 20 is operated and the visible-to-UV light conversion device 24 is illuminating the object 12 with UV light. In the last image 154 that is acquired without flash, the indicia 14 are partly visible, because one of the UV-responsive materials 130 has an emission lifetime that is longer than the time between the capture of images 152 and 154 whereas the other UV-responsive material 132 has an emission lifetime that is shorter than the time between the capture of images 152 and 154. Examples of UV-responsive materials with a long emission lifetime are rare-earth-doped strontium aluminates or copper-activated zinc sulfide. Examples of materials with a short emission lifetime include UV fluorescent dyes such as 7-hydroxycoumarin, CAS RN 93-35-6 or Disodium 2,2'-([1,1'-biphenyl]-4,4'-diyldivinylene)bis(benzenesulphonate) CAS RN 27344-41-8. Materials with intermediate emission lifetimes include europium chelates such as Eu[(3-thenoyltrifluoroacetonate)₃(H₂O)₂] CAS RN 21392-96-1.

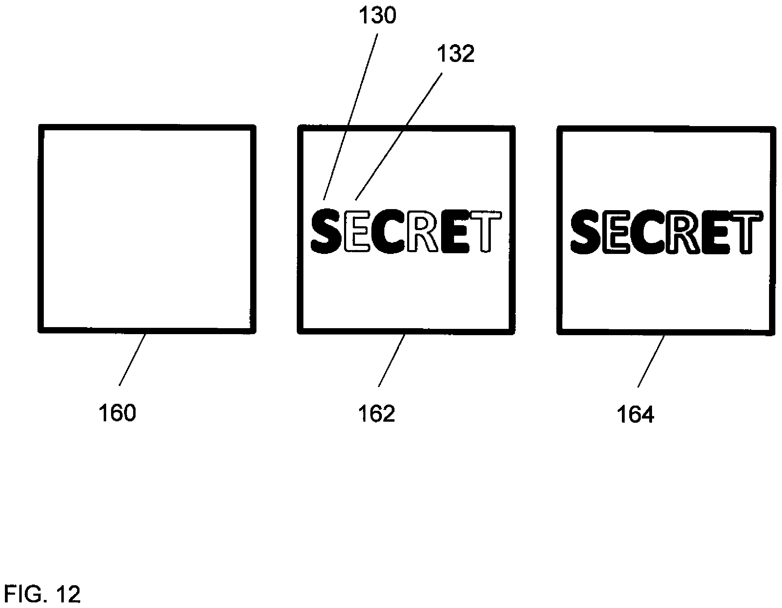

FIG. 12 is a schematic representation of a sequence of image captures of the object 12 in FIG. 10 where the first image 160 is captured with the sensor when the flash 20 is not operated. The second and third images 162, 164 are captured when the flash 20 is operated. In the first image 160, the indicia 14 are invisible because there is no incident UV light from the visible-to-UV light conversion device 24. In the second and third image 162 and 164 the indicia 14 are visible because the flash 20 is operated, and the visible-to-UV light conversion device 24 is illuminating the object 12 with UV light. However, the two UV light responsive materials 130, 132 differ in their response to UV illumination. Material 130 reacts instantly to the exciting UV radiation reaching a stationary value of brightness in images 162 and 164. In contrast, UV light responsive material 132 reacts slowly to the incident UV radiation and builds up emission intensity over time. Therefore the brightness of UV-responsive material 132 is higher in captured image 164 than image 162. In FIG. 12 brightness (or emission intensity) differences are depicted by representing the indicia 14 with a normal font for the less bright state of the characters "R", "T", and the first "E" in image 162 and a bold font for those same characters in the brighter state of image 164.

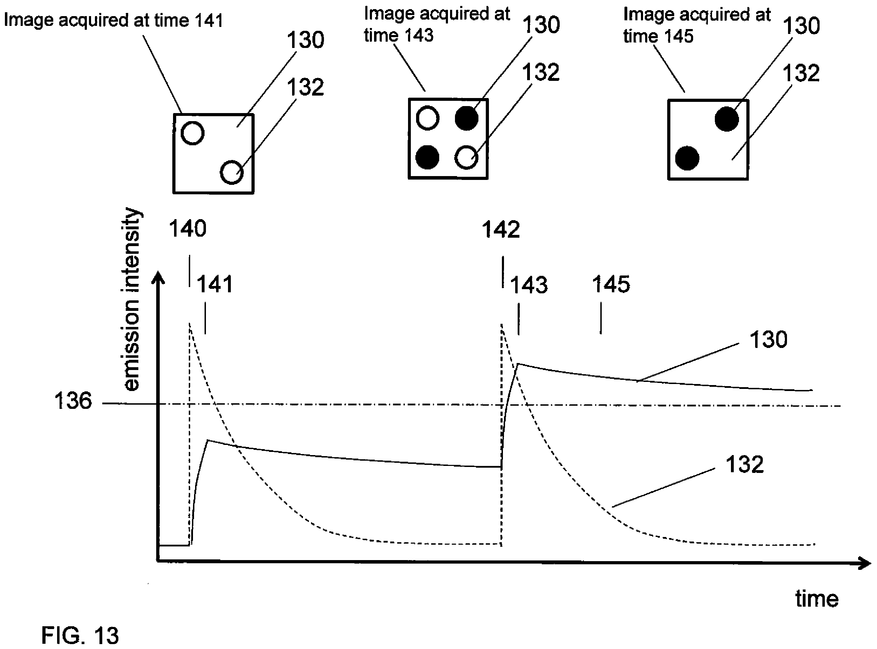

FIG. 13 shows the time behavior of the emission of two UV-responsive materials undergoing two sequential flash exposures. Illustrated are the moments in time corresponding to the first flash exposure 140, the first image acquisition 141, the second flash exposure 142, the second image acquisition 143, and a third image acquisition 145. On the emission intensity axis, a threshold value 136 indicates the emission intensity level above which the pixel is considered in the on or 1 state and below which the pixel is considered to be in the off or 0 state. A microprocessor (e.g. microprocessor 26 in FIG. 1) with appropriate software can analyze the image for emission intensity and determine the binary value, 1 or 0, for example by comparing the pixel emission intensity level to the threshold value 136. In the image corresponding to the first image acquisition 141 after the first flash 140 the pixels that represent material 132 are on whereas the pixels that represent material 130 are off. In the image corresponding to the second image acquisition 143 the pixels that represent both material 132 and 130 are on because material 130 with the long emission lifetime retains some emission intensity from the first flash exposure 140 and consequently the second flash exposure 142 increases the emission intensity above the threshold level 136. In the image corresponding to the third image acquisition 145 the pixels that represent material 130 are on because material 130 with the long emission lifetime retains some emission intensity from the first and second flash exposures 140, 142. In contrast, the material 132 has decayed below the threshold level 136. A comparison of the pixels in the three images makes it possible to distinguish indicia on an object that contain both types of UV-responsive materials from an object with indicia that are composed of just one of the UV-responsive materials or none at all. Authentication can depend on the location of the pixels of material 130 and pixels of material 132 in all three images. Thus, both the location and the temporal sequence of pixels form an authentication code dependent upon the sequence and timing of the flashes and the image captures. Note that, in this example, the image captures are at irregular intervals.

In further embodiments, more than two flashes are used in sequence and more than two or more than three image captures are employed to authenticate an object 12. For example material 130 could require three flashes to emit light with an intensity greater than the threshold level 136.

Thus, in various embodiments of the present invention, authentication can depend upon the presence of the different UV-responsive material, their rate of decay in response to UV-light exposure, to a pre-determined sequence of UV-light exposures, and to a pre-determined sequence of image captures. The UV-light exposures and image captures can be at regular intervals or irregular intervals. Image captures can be made immediately after a flash or independently of a flash. The sequence and timing of flashes and image captures can be used to control temporal material emission and thus to determine authenticity.

The different materials can be located at spatially distinct locations, as in FIGS. 8-12. In another embodiment, the different materials are located in a visually common location. As the materials acquire energy or decay at different rates, the light emission at the visually common location can change color. For example, referring to FIG. 12, if material 130 emits red light and material 132 emits green light in response to UV illumination, the visually common location would change over time from green (green material 132 only) to yellow (both red and green materials 130, 132) to red (only red material 130).

In an unclaimed embodiment, the first captured image can be used to determine the number and timing of subsequent flash exposures and image captures. The first image can be analyzed to determine information that is then used to find flash and image capture timing information for subsequent flashes and image captures and to find authentication information, for example in a lookup table in memory 28. Thus, the time until a second flash or image capture can depend upon information extracted from an image capture with a flash at a first time.

### PARTS LIST

- 12: object
- 14: UV light fluorescent indicia
- 15: visible light
- 16: incident UV light
- 17: reflected visible light
- 18: camera
- 20: flash
- 22: sensor
- 24: visible-to-UV light conversion device
- 26: microprocessor
- 28: memory
- 30: photovoltaic device
- 32: UV lamp
- 34: electrical connection
- 36: light shield
- 38: control electronics
- 40: energy storage (capacitor or rechargeable battery)
- 100: mobile device with digital camera (smart phone) - front side
- 101: mobile device with digital camera (smart phone) - back side
- 110: display
- 120: data transmission (external communication, local area network communication, or cellular telephony communication)
- 122: remote computer
- 130: UV responsive particle with first response
- 132: UV responsive particle with second response
- 136: threshold emission intensity level
- 140: first flash exposure
- 141: first image acquisition
- 142: second flash exposure
- 143: second image acquisition
- 145: third image acquisition
- 150: first image when the flash is not operated
- 152: second image when flash is operated
- 154: third image when flash is not operated
- 160: first image when the flash is not operated
- 162: second image when flash is operated
- 164: third image when flash is operated

## Claims

1. A system configured to detect UV-light-fluorescent indicia (14) with a camera (18) comprising:
a camera flash (20) configured to emit visible light;
a conversion device (24) mounted over the camera flash (20) which is configured to convert the emitted visible light to UV light and to direct the UV light onto the indicia (14); and
a sensor (22) configured to capture a visible-light image of the indicia (14) after the indicia (14) is exposed to the UV light.

2. The system of claim 1 wherein the conversion device (24) comprises:
a photovoltaic device (30) configured to convert the visible light emitted by the camera flash (20) to electrical power; and
a UV lamp (32)configured to convert the electric power to UV light.

3. The system of claim 1 further comprising:
a microprocessor (26) configured to analyze the captured image, to compare the analyzed image to stored information, and to authenticate the captured image if it matches the stored information, including software for comparing the elements of the image to a threshold for determining a binary value.

4. The system of claim 1 further comprising:
a display (110) configured to display the captured image and indicating authenticity if the displayed captured image matches a standard.

5. The system of claim 1 further comprising:
a first transmitter configured to transmit captured image information from the camera (18) to a remote computer; wherein the remote computer is configured to authenticate the transmitted information if the transmitted information matches a standard;
a second transmitter configured to transmit the authentication back to the camera (18);
a receiver in the camera (18) configured to receive the authentication; and
an indicator on the camera (18) configured to indicate authenticity.

6. The system of claim 1 wherein the system is configured to detect the indicia (14) based on a plurality of UV-responsive particles that are spatially arranged therein.

7. The system of claim 1 wherein the system is configured to detect the indicia (14) based on a plurality of UV-responsive particles that each have a different fluorescent response to UV light.

8. The system of claim 7 wherein the different fluorescent response is color of emission.

9. The system of claim 1 wherein the system is configured to detect the indicia (14) based on a plurality of UV-responsive particles that each has a different luminance

10. The system of claim 1 wherein the system comprises an image-capture burst mode function in the camera (18) configured to capture a sequence of images of the indicia (14) with the sensor (22), and wherein the system is configured to detect indicia (14) based on a plurality of UV-responsive particles with different decay rates.

11. The system of claim 10 wherein the camera (18) further includes a microprocessor (26) configured to analyze the sequence of images, or compares detected elements in the image.

12. The system of claim 10 wherein the sensor (22) includes a mode configured to capture at least one image when the flash is not operated.

13. The system of claim 1 wherein the system is configured to detect the indicia (14) based on an image, text, graphic element, bar code or logo.

14. The system of claim 1 wherein the camera (18) is a cell-phone camera (18) or smart phone camera (18) and further includes means for external communication, local area network communication, or cellular telephony communication.

15. The system of claim 1 wherein the system is configured to detect indicia(14) which change color over time.

## Patentansprüche

1. System, das konfiguriert ist, um UV-Lichtfluoreszenzkennzeichen (14) mit einer Kamera (18) zu detektieren, das folgendes aufweist:
einen Kamerablitz (20), der konfiguriert ist, um sichtbares Licht zu emittieren; eine Umwandlungsvorrichtung (24), die über dem Kamerablitz (20) montiert ist, die konfiguriert ist, um das emittierte sichtbare Licht in UV-Licht umzuwandeln und das UV-Licht auf die Kennzeichen (14) zu richten; und
einen Sensor (22), der konfiguriert ist, um ein Bild des sichtbaren Lichts der Kennzeichen (14) zu erfassen bzw. aufzunehmen, nachdem die Kennzeichen (14) dem UV-Licht ausgesetzt wurden.

2. System nach Anspruch 1, wobei die Umwandlungsvorrichtung (24) folgendes aufweist:
eine Photovoltaikvorrichtung (30), die konfiguriert ist, um das vom Kamerablitz (20) emittierte sichtbare Licht in elektrische Energie umzuwandeln; und
eine UV-Lampe (32), die konfiguriert ist, um die elektrische Energie in UV-Licht umzuwandeln.

3. System nach Anspruch 1, das ferner Folgendes aufweist:
einen Mikroprozessor (26), der konfiguriert ist, um das aufgenommene Bild zu analysieren, das analysierte Bild mit gespeicherten Informationen zu vergleichen und das aufgenommene Bild zu authentifizieren, wenn es mit den gespeicherten Informationen übereinstimmt, mit Software zum Vergleichen der Elemente des Bildes mit einem Schwellenwert zum Bestimmen eines Binärwerts.

4. System nach Anspruch 1, das ferner Folgendes aufweist:
eine Anzeige bzw. ein Display (110), die/das konfiguriert ist, um das aufgenommene Bild anzuzeigen und Authentizität anzuzeigen, falls das angezeigte aufgenommene Bild einem Standard entspricht.

5. System nach Anspruch 1, das ferner Folgendes aufweist:
einen ersten Sender, der konfiguriert ist, um erfasste bzw. aufgenommene Bildinformationen von der Kamera (18) an einen entfernten Computer zu übertragen; wobei der entfernte Computer konfiguriert ist, um die übertragenen Informationen zu authentifizieren, wenn die übertragenen Informationen einem Standard entsprechen;
einen zweiten Sender, der konfiguriert ist, um die Authentifizierung zurück an die Kamera (18) zu übertragen;
einen Empfänger in der Kamera (18), der konfiguriert ist, um die Authentifizierung zu empfangen; und
eine Anzeige an der Kamera (18), die konfiguriert ist, um die Authentizität anzuzeigen.

6. System nach Anspruch 1, wobei das System konfiguriert ist, um die Kennzeichen (14) basierend auf einer Vielzahl von auf UV-ansprechenden Partikeln zu detektieren, die darin räumlich angeordnet sind.

7. System nach Anspruch 1, wobei das System konfiguriert ist, um die Kennzeichen (14) basierend auf einer Vielzahl von auf UV-ansprechenden Partikeln zu detektieren, die jeweils eine unterschiedliche Fluoreszenzreaktion auf UV-Licht aufweisen.

8. System nach Anspruch 7, wobei die unterschiedliche Fluoreszenzreaktion die Farbe der Emission ist.

9. System nach Anspruch 1, wobei das System konfiguriert ist, um die Kennzeichen (14) basierend auf einer Vielzahl von auf UV-ansprechenden Partikeln zu detektieren, die jeweils eine unterschiedliche Leuchtdichte aufweisen.

10. System nach Anspruch 1, wobei das System Folgendes aufweist:
eine Bildaufnahme-Serienbildmodusfunktion in der Kamera (18), die konfiguriert ist, um eine Folge von Bildern der Kennzeichen (14) mit dem Sensor (22) aufzunehmen, und wobei das System konfiguriert ist, die Kennzeichen (14) basierend auf einer Vielzahl von auf UV-ansprechenden Partikeln mit unterschiedlichen Zerfallsraten zu detektieren.

11. System nach Anspruch 10, wobei die Kamera (18) ferner einen Mikroprozessor (26) aufweist, der konfiguriert ist, um die Folge von Bildern zu analysieren oder detektierte Elemente in dem Bild zu vergleichen.

12. System nach Anspruch 10, wobei der Sensor (22) einen Modus aufweist, der konfiguriert ist, um wenigstens ein Bild aufzunehmen, wenn der Blitz nicht betätigt wird.

13. System nach Anspruch 1, wobei das System konfiguriert ist, um die Kennzeichen (14) basierend auf einem Bild, Text, Grafikelement, Strichcode oder Logo zu detektieren.

14. System nach Anspruch 1, wobei die Kamera (18) eine Handykamera (18) oder eine Smartphone-Kamera (18) ist und ferner Mittel zur externen Kommunikation, lokalen Netzwerkkommunikation oder Mobiltelefoniekommunikation aufweist.

15. System nach Anspruch 1, wobei das System konfiguriert ist, um die Kennzeichen (14), die die Farbe im Laufe der Zeit ändern, zu detektieren.

## Revendications

1. Système configuré pour détecter des indices fluorescents de lumière UV (14) avec une caméra (18) comprenant :
un flash de caméra (20) configuré pour émettre une lumière visible ;
un dispositif de conversion (24) monté sur le flash de la caméra (20) qui est configuré pour convertir la lumière visible émise en lumière UV et pour diriger la lumière UV vers les indices (14) ; et
un capteur (22) configuré pour capturer une image en lumière visible des indices (14) après que les indices (14) ont été exposés à la lumière UV.

2. Système selon la revendication 1, dans lequel le dispositif de conversion (24) comprend :
un dispositif photovoltaïque (30) configuré pour convertir la lumière visible émise par le flash de la caméra (20) en énergie électrique ; et
une lampe UV (32) qui convertit l'alimentation électrique en lumière UV.

3. Système selon la revendication 1, comprenant en outre :
un microprocesseur (26) configuré pour analyser l'image capturée, pour comparer l'image analysée à des informations stockées, et pour authentifier l'image capturée si elle correspond aux informations stockées, comportant un logiciel pour comparer les éléments de l'image à un seuil pour déterminer une valeur binaire.

4. Système selon la revendication 1, comprenant en outre :
un affichage (110) configuré pour afficher l'image capturée et indiquant une authenticité si l'image capturée affichée correspond à une norme.

5. Système selon la revendication 1, comprenant en outre :
un premier émetteur configuré pour transmettre des informations d'images capturées de la caméra (18) à un ordinateur distant ; dans lequel l'ordinateur distant est configuré pour authentifier les informations transmises si les informations transmises correspondent à une norme ;
un deuxième émetteur configuré pour retransmettre l'authentification à la caméra (18) ;
un récepteur dans la caméra (18) configuré pour recevoir l'authentification ; et
un indicateur sur la caméra (18) configuré pour indiquer l'authenticité.

6. Système selon la revendication 1, dans lequel le système est configuré pour détecter les indices (14) sur la base d'une pluralité de particules sensibles aux UV qui sont agencées dans l'espace.

7. Système selon la revendication 1, dans lequel le système est configuré pour détecter les indices (14) sur la base d'une pluralité de particules sensibles aux UV qui ont chacune une réponse fluorescente différente à la lumière UV.

8. Système selon la revendication 7, dans lequel la réponse fluorescente différente est la couleur de l'émission.

9. Système selon la revendication 1, dans lequel le système est configuré pour détecter les indices (14) sur la base d'une pluralité de particules sensibles aux UV qui ont chacune une luminance différente.

10. Système selon la revendication 1, dans lequel le système comprend une fonction de mode rafale de capture d'image dans la caméra (18) configurée pour capturer une séquence d'images des indices (14) avec le capteur (22) et dans lequel le système est configuré pour détecter des indices (14) sur la base d'une pluralité de particules sensibles aux UV avec différentes vitesses de désintégration.

11. Système selon la revendication 10, dans lequel la caméra (18) comprend en outre un microprocesseur (26) configuré pour analyser la séquence d'images, ou compare des éléments détectés dans l'image.

12. Système selon la revendication 10, dans lequel le capteur (22) comporte un mode configuré pour capturer au moins une image quand le flash n'est pas activé.

13. Système selon la revendication 1, dans lequel le système est configuré pour détecter les indices (14) sur la base d'une image, d'un texte, d'un élément graphique, d'un code à barres ou d'un logo.

14. Système selon la revendication 1, dans lequel la caméra (18) est une caméra de téléphone cellulaire (18) ou une caméra de téléphone intelligent (18) et comporte en outre des moyens de communication externe, de communication de réseau local, ou de communication de téléphonie cellulaire.

15. Système selon la revendication 1, dans lequel le système est configuré pour détecter les indices (14) qui changent de couleur avec le temps.
